# EUROPÄISCHE PATENTSCHRIFT

(11) **EP 1 166 415 B1**
(45) Veröffentlichungstag und Bekanntmachung des Hinweises auf die Patenterteilung: **09.07.2003**
(21) Anmeldenummer: 00931023.6
(22) Anmeldetag: 11.04.2000
(51) Int. Cl.: H02G 3/04

(54) **VORRICHTUNG ZUM EINZIEHEN VON ELEKTRISCHEN INSTALLATIONSDRÄHTEN IN EIN WELLROHR**
DEVICE FOR PULLING IN ELECTRICAL WIRING CABLES IN A CORRUGATED PIPE
DISPOSITIF POUR TIRER DES FILS DOMESTIQUES ELECTRIQUES DANS UN TUBE ONDULE

(30) Priorität: 14.04.1999 DE 19916642
(43) Veröffentlichungstag der Anmeldung: 02.01.2002
(73) Patentinhaber: Schlemmer Rohrproduktions GmbH, 97437 Hassfurt (DE)
(72) Erfinder: VOLL-MARJANOVIC, Mile, D-97437 Hassfurt (DE)
(74) Vertreter: LOUIS- PÖHLAU- LOHRENTZ
(86) Internationale Anmeldenummer: DE0001182
(87) Internationale Veröffentlichungsnummer: WO00062388

(56) Entgegenhaltungen:
- EP-A- 0 114 213
- EP-A- 0 860 921
- DE-U- 29 719 158

## Beschreibung

Die Erfindung betrifft eine Vorrichtung zum Einziehen von elektrischen Installationsdrähten in ein Wellrohr, das eine nach innen offene, ein Hakenprofil bildende erste Längsrinne, eine dazu parallele, nach innen offene, ein Widerhakenprofil bildende zweite Längsrinne und dazwischen eine nach außen offene dritte Längsrinne aufweist, wobei das Wellrohr entlang der dritten Längsrinne zur Ausbildung eines Längsschlitzes auftrennbar und der Längsschlitz des Wellrohres durch Verhaken des Widerhakenprofils mit dem Hakenprofil wieder verschließbar ist.

Ein Wellrohr der oben genannten Art ist aus der DE 196 41 421 bekannt. Wie dort beschrieben ist, wird das Verhaken des Widerhakenprofils mit dem Hakenprofil des Wellrohres von Hand, d.h. mit den Fingern, durchgeführt.

Der Erfindung liegt die Aufgabe zugrunde, eine Vorrichtung der oben genannten Art zu schaffen, mit der es einfach und zeitsparend möglich ist,das jeweilige Wellrohr längszuschlitzen und den Längsschlitz simultan auch wieder zu verschließen und dabei gleichzeitig elektrische Leitungsdrähte in das Wellrohr einzuziehen.

Diese Aufgabe wird bei einer Vorrichtung der eingangs genannten Art erfindungsgemäß gelöst durch einen Dorn mit einem in die erste Längsrinne hineinstehenden ersten Führungsorgan und mit einem in die zweite Längsrinne hineinstehenden zweiten Führungsorgan, ein zwischen dem ersten und dem zweiten Führungsorgan vorgesehenes Schneidelement zum Längsschlitzen des Wellrohres entlang der dritten Längsrinne während des Aufschiebens des Wellrohres auf den Dorn, eine dem Schneidelement in Aufschieberichtung des Wellrohres stromabwärts nachgeordnete Verschlußeinrichtung zum kontinuierlichen Verschließen des Längsschlitzes durch Verhaken des Widerhakenprofils mit dem Hakenprofil während des Aufschiebens des Wellrohres auf den Dom, und eine an dem in Aufschieberichtung des Wellrohres stromabwärtigen distalen Endabschnitt des Dorns vorgesehene Halteeinrichtung für die Installationsdrähte.

Mit Hilfe der erfindungsgemäßen Vorrichtung ist es einfach möglich, das längszuschlitzende Wellrohr genau passend positioniert am Dorn anzuordnen, um daran anschließend durch Aufschieben des Wellrohres auf den Dorn das Wellrohr entlang der dritten Längsrinne längszuschlitzen. Dabei wird das Wellrohr mit Hilfe des ersten und des zweiten Führungsorgans des Dornes auf diesen genau passend positioniert, um das Wellrohr während des Aufschiebens auf den Dorn entlang der dritten Längsrinne längszuschlitzen. Mit Hilfe der dem Schneidelement in Aufschieberichtung des Wellrohres stromabwärts nachgeordneten Verschlußeinrichtung wird das längsgeschlitzte Wellrohr simultan wieder dadurch temporär verschlossen, daß das Widerhakenprofil mit dem Hakenprofil verhakt wird. Soll also zu einem späteren Zeitpunkt zusätzlich zu den bereits im Wellrohr befindlichen Installationsdrähten wenigstens ein weiterer Installationsdraht im Wellrohr angeordnet werden, so kann das Wellrohr problemlos geöffnet und mit dem wenigstens einen zusätzlichen Installationsdraht bestückt werden. Danach kann das Wellrohr dann wieder verschlossen werden.

Vorteilhaft ist es, wenn bei der erfindungsgemäßen Vorrichtung der Dorn einen Wellrohr-Aufschiebeabschnitt mit einem Querschnittsprofil aufweist, das an das lichte Querschnittsprofil des Wellrohres in seinem Originalzustand vor den Längsschlitzen angepaßt ist. Durch eine solche Ausbildung wird nicht nur eine exakte Führung des Wellrohres durch die erfindungsgemäße Vorrichtung hindurch erreicht, sondern außerdem auch ein exaktes Längsschlitzen des Wellrohres entlang der dritten Längsrinne.

Das erste und das zweite Führungsorgan am Wellrohr-Aufschiebeabschnitt des Doms können von Längsrippen gebildet sein, die vom Dorn radial wegstehen und die in axialer Richtung des Dorns orientiert sind. Die jeweilige Längsrippe kann ein an die zugehörige erste bzw. zweite Längsrinne angepaßtes Querschnittsprofil besitzen. Die Längsrippen weisen in Umfangsrichtung des Dorns voneinander einen Abstand auf, der dem Abstand zwischen der ersten und der zweiten Längsrinne des Wellrohres im Originalzustand, d.h. im noch nicht längsgeschlitzten Zustand, entspricht.

Das Schneidelement der erfindungsgemäßen Vorrichtung kann von einer Schneidklinge gebildet sein, die zwischen den beiden, das erste und das zweite Führungsorgan bildenden Längsrippen aus dem Dorn heraussteht. Die Schneidklinge kann bspw. von einer Industrieklinge gebildet sein.

Das Schneidelement und die Wellrohr-Verschlußeinrichtung können an einem Gehäuse vorgesehen sein, das mit dem Dorn mittels einer zwischen dem Schneidelement und der Wellrohr-Verschlußeinrichtung vorgesehenen Wellrohr-Aufspalteinrichtung verbunden ist. Die Wellrohr-Aufspalteinrichtung kann hierbei eine Spaltklinge aufweisen, die mit der Schneidklinge des Schneidelementes axial fluchtet, d.h. die mit der Schneidklinge koplanar vorgesehen ist. Die Wellrohr-Aufspalteinrichtung dient auch zur genauen Führung des längsgeschlitzten Wellrohres zur Wellrohr-Verschlußeinrichtung hin, um das längsgeschlitzte Wellrohr mit Hilfe der Verschlußeinrichtung simultan wieder durch Verhaken des Widerhakenprofils mit dem Hakenprofil des Wellrohres zu verschließen. Zu diesem Zwecke hat es sich als vorteilhaft erwiesen, wenn die Verschlußeinrichtung eine Verschlußrolle mit einer abgestuften konkaven Innenkontur aufweist, die zum Einhaken des Widerhakenprofils in das Hakenprofil des Wellrohrs dient. Dieses Verhaken ist insbesondere dann zuverlässig und zeitsparend möglich, wenn zur Verschlußrolle parallel orientiert eine Gegenrolle mit einer konkaven Innenkontur vorgesehen ist, wobei sich der Dorn zwischen der Verschlußrolle und der Gegenrolle, zu diesen senkrecht orientiert, hindurcherstreckt. Die konkaven Innenkonturen der Verschluß- und der Gegenrolle sind dabei zweckmäßigerweise an die Außenkontur des Wellrohres angepaßt. Die Verschlußrolle und die Gegenrolle sind zweckmäßigerweise an einem Dornabschnitt reduzierten Querschnitts vorgesehen, um das Widerhakenprofil des Wellrohres mit dessen Hakenprofil problemlos verhaken zu können.

Bei einer professionellen Komfortausbildung der erfindunsgemäßen Vorrichtung können die Verschlußrolle und/oder die Gegenrolle zum Vorschub des Wellrohres entlang des Dornes mittels eines Motors antreibbar sein. Eine einfachere, preisgünstige Ausbildung der erfindungsgemäßen Vorrichtung verzichtet auf einen solchen Antriebsmotor, d.h. bei einer solchen Ausbildung der zuletzt genannten Art muß das längszuschlitzende und wieder zu verschließende Wellrohr von Hand auf den Dorn aufgeschoben werden, um das Wellrohr mit Hilfe des Schneidelementes längszuschlitzen und simultan mit Hilfe der Verschlußeinrichtung wieder zu verschließen.

Erfindungsgemäß kann die am distalen Endabschnitt des Dorns vorgesehene Halteeinrichtung für die elektrischen Installationleitungen als Klemmeinrichtung ausgebildet sein. Bei dieser Klemmeinrichtung kann es sich z.B. um eine Schraubklemmeinrichtung handeln.

Weitere Einzelheiten und Vorteile ergeben sich aus der nachfolgenden Beschreibung eines in der Zeichnung schematisch dargestellten Ausführungsbeispieles der erfindungsgemäßen Vorrichtung sowie eines Wellrohres, das mit Hilfe dieser Vorrichtung längsschlitzbar und wieder verschließbar ist. Es zeigen:
- Figur 1: eine Ausbildung der Vorrichtung in einer Seitenansicht,
- Figur 2: halbseitig längsgeschnitten einen Abschnitt eines Wellrohres,
- Figur 3: einen Querschnitt durch ein Wellrohr im nicht längsgeschlitzten Originalzustand,
- Figur 4: in einer der Figur 3 ähnlichen Querschnittsdarstellung das Wellrohr während des Verhakens seines Widerhakenprofils mit seinem Hakenprofil,
- Figur 5: in einer den Figuren 3 und 4 ähnlichen Querschnittsdarstellung das längsgeschlitzte und wieder verhakte, d.h. nach dem Längsschlitzen wieder verschlossene Wellrohr,
- Figur 6: einen Schnitt entlang der Schnittlinie VI-VI in Figur 1 zur Verdeutlichung der vom Dorn wegstehenden Führungsorgane und des dazwischen vorgesehenen Schneidelementes in Kombination mit einem Wellrohr
- ähnlich dem in Figur 3 gezeichneten Wellrohr -,
- und
- Figur 7: einen Schnitt entlang der Schnittlinie VII-VII in Figur 2 zur Verdeutlichung der Verschlußrolle der Verschlußeinrichtung und ihrer Wirkungsweise zum Verhaken des längsgeschlitzten Wellrohres.

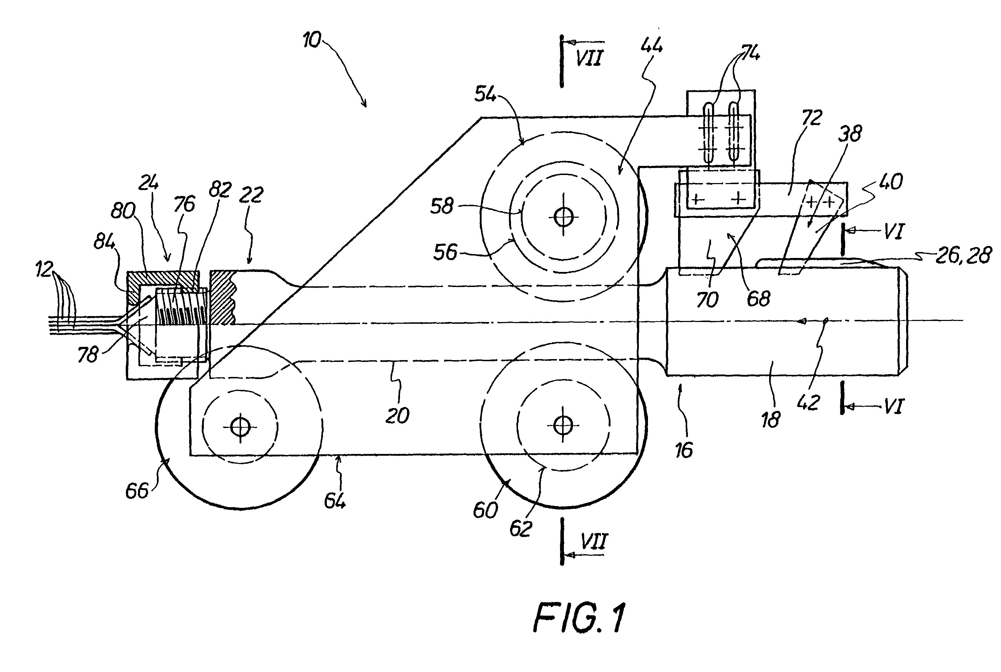

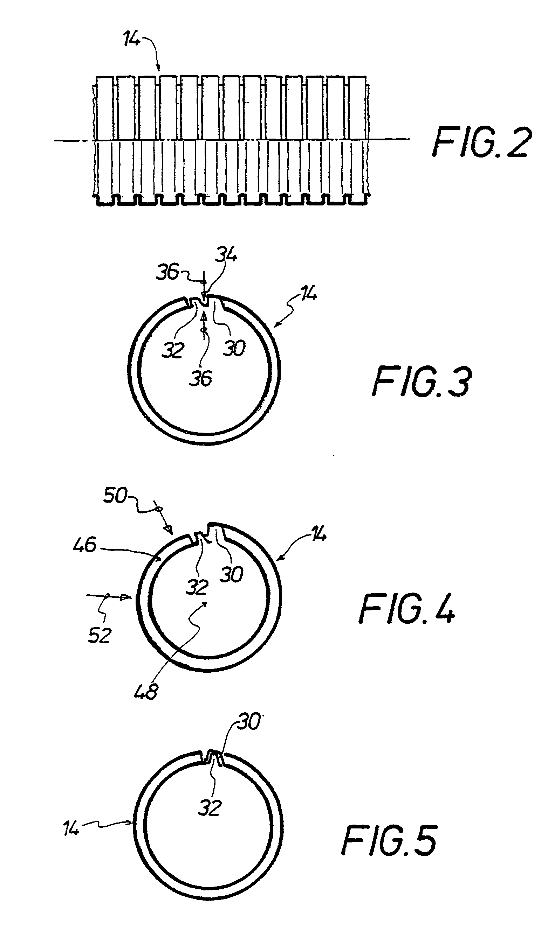

Figur 1 zeigt in einer Seitenansicht eine Vorrichtung 10 zum Einziehen von elektrischen Installationsdrähten 12 in ein Wellrohr 14 (sh. Figur 2). Die Vorrichtung 10 weist einen Dorn 16 mit einem Wellrohr-Aufschiebeabschnitt 18, einem sich daran anschließenden Dornabschnitt 20 reduzierten Querschnittes und einem sich an diesen anschließenden distalen Endabschnitt 22 mit einer Halteeinrichtung 24 zum Festhalten der elektrischen Installationsdrähte 12 auf.

Der Wellrohr-Aufschiebeabschnitt 18 des Dorns 16 weist ein erstes Führungsorgan 26 und ein zweites Führungsorgan 28 auf, die als Längsrippen ausgebildet sind.

Wie aus Figur 3 ersichtlich ist, weist das Wellrohr 14 eine erste, nach innen offene Längsrinne 30 auf, die ein Hakenprofil bildet. Das Wellrohr 14 weist außerdem eine zweite, nach innen offene Längsrinne 32 auf, die ein Widerhakenprofil bildet. Zwischen der ersten und der zweiten Längsrinne 30 und 32 ist eine dritte Längsrinne 34 vorhanden, die nach außen offen ist.

Das Wellrohr 14 ist entlang der dritten Längsrinne 34 zur Ausbildung eines Längsschlitzes im Wellrohr 14 auftrennbar. Dieses Auftrennen des Wellrohres 14 entlang der dritten Längsrinne 34 ist in Figur 3 durch die beiden Pfeile 36 angedeutet. Dieses Auftrennen, d.h. Längsschlitzen des Wellrohres 14 geschieht mit Hilfe eines Schneidelementes 38 (sh. Figur 1), das von einer Schneidklinge 40 gebildet ist.

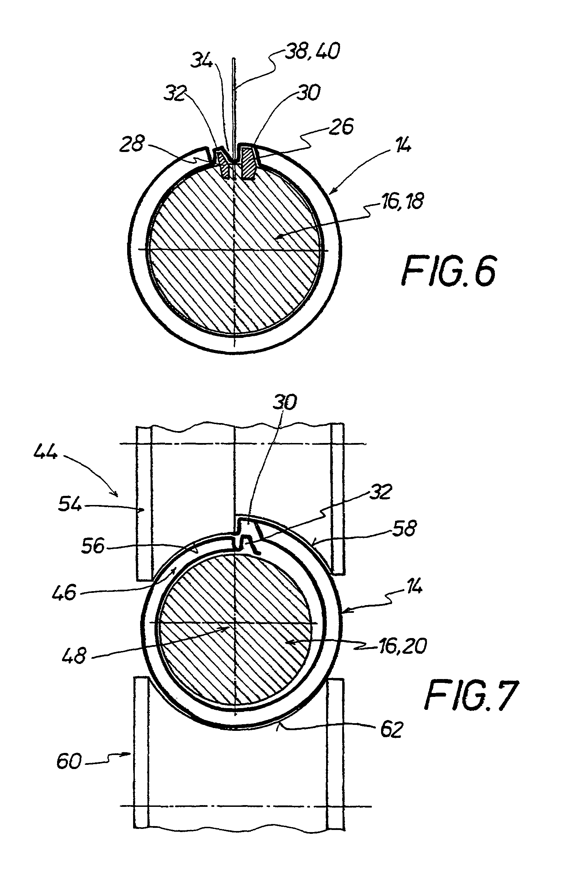

Wie aus Figur 6 ersichtlich ist, weist das erste Führungsorgan 26 am Wellrohr-Aufschiebeabschnitt 18 des Dorns 16 ein Querschnittsprofil auf, das an den lichten Querschnitt der nach innen offenen ersten Längsrinne 30 angepaßt ist. Das erste Führungsorgan 26 steht in die erste Längsrinne 30 hinein. Das zweite Führungsorgan 28 weist ein Querschnittsprofil auf, das an das nach innen offene lichte Querschnittsprofil der zweiten Führungsrinne 32 angepaßt ist. Das zweite Führungsorgan 28 steht in die zweite Längsrinne 32 hinein. Mit Hilfe des ersten und des zweiten Führungsorganes 26 und 28 wird das längszuschlitzende Wellrohr 14 also entlang des Wellrohr-Aufschiebeabschnittes 18 des Dorns 16 exakt positioniert geführt, so daß das Wellrohr 14 mit Hilfe der Schneidklinge 40 des Schneidelementes 38 zwischen der ersten und der zweiten Längsrinne 30 und 32 exakt entlang der nach außen offenen dritten Längsrinne 34 aufgetrennt wird, wenn das Wellrohr 14 auf dem Dorn 16 in Richtung des Pfeiles 42 (sh. Figur 1) entlangbewegt wird.

Aus Figur 6 ist auch ersichtlich, daß die Schneidklinge 40 des Schneidelementes 38 zwischen dem ersten und dem zweiten Führungsorgan 26 und 28 des Dorns 16 vorgesehen ist.

Dem Schneidelement 38 der Vorrichtung 10 ist in der durch den Pfeil 42 angedeuteten Aufschieberichtung des Wellrohres 14 stromabwärts eine Verschlußeinrichtung 44 nachgeordnet, die zum kontinuierlichen Verschließen des Längsschlitzes des Wellrohres 14 durch Verhaken des Widerhakenprofiles 32 mit dem Hakenprofil 30 während des Aufschiebens des Wellrohres 14 auf den Dorn 16 vorgesehen ist. Das ist in Figur 4 in einer Zwischenposition und in Figur 5 in der verhakten und das längsgeschlitzte Wellrohr 14 wieder verschließenden Position verdeutlicht. Zu diesem Wiederverschließen des Wellrohres 14 ist es erforderlich, den das Widerhakenprofil 32 aufweisenden Längsrandabschnitt 46 des Wellrohres 14 in Richtung zum Zentrums 48 des Wellrohres 14 bzw. des Dorns 16 zu zwängen. Das ist in Figur 4 durch die beiden Pfeile 50 und 52 schematisch angedeutet. Dieses Nachinnenzwängen des besagten Längsrandabschnittes 46 des Wellrohres 14 erfolgt mit Hilfe einer Veschlußrolle 54, die - wie aus Figur 7 ersichtlich ist - eine abgestufte konkave Innenkontur mit einem ersten Konturabschnitt 56 und mit einem daran axial angrenzenden zweiten Konturabschnitt 58 aufweist. Der erste Konturabschnitt 56 weist größere Durchmesser auf als der zweite Konturabschnitt 58, so daß mit Hilfe des ersten Konturabschnittes 56 der das Widerhakenprofil 32 aufweisende Randabschnitt 46 des Wellrohres 14 nach innen gezwängt wird (sh. auch Figur 4), so daß sich das Widerhakenprofil 32 mit dem Hakenprofil 30 verhakt. Dieser wiederverhakte temporär geschlossene Zustand des Wellrohres 14 ist in Figur 5 dargestellt.

Die Wellrohr-Verschlußeinrichtung 44 ist im Bereich des Domabschnittes 20 reduzierten Durchmessers vorgesehen. Die Verschlußeinrichtung 44 weist außerdem eine Gegenrolle 60 auf, die mit einer konkaven Innenkontur 62 ausgebildet ist (sh. Figur 7). Die Verschlußrolle 54 und die Gegenrolle 60 der Verschlußeinrichtung 44 sind voneinander beabstandet zueinander parallel vorgesehen. Der Dorn 16 erstreckt sich mit seinem Dornabschnitt reduzierten Querschnitts zwischen der Verschlußrolle 54 und der Gegenrolle 60, zu diesen senkrecht orientiert, hindurch.

Die Verschlußrolle 54 und die Gegenrolle 60 sind an einem Gehäuse 64 der Vorrichtung 10 drehbar gelagert. Am Gehäuse 64 ist in der Nachbarschaft des distalen Endabschnittes 22 des Dorns 16 außerdem eine Führungsrolle 66 gelagert, die - ähnlich wie die Gegenrolle 60 der Verschlußeinrichtung 44 - mit einer konkaven Innenkontur 62 ausgebildet ist.

Das Gehäuse 64 ist mit dem Dorn 16 mittels einer Wellrohr-Aufspalteinrichtung 68 verbunden. Die Wellrohr-Aufspalteinrichtung 68 weist eine Spaltklinge 70 auf. Die Schneidklinge 40 des Schneidelementes 38 ist mit der Spaltklinge 70 mittels einer Verbindungseinrichtung 72 mechanisch fest verbunden. Die Spaltklinge 70 ist am Gehäuse 64 einstellbar fixiert. Zu diesem Zwecke sind bspw. Längsschlitze 74 ausgebildet.

Der distale Endabschnitt 22 des Dorns 16 ist mit einem Gewindezapfen 76 ausgebildet, von dem endseitig ein Kegel 78 wegsteht. Die Halteeinrichtung 24 weist eine Schraubhülse 80 mit einem Innengewindeabschnitt 82 und mit einem Bund 84 auf. Wird die Schraubhülse 80 der Halteeinrichtung 24 auf den Gewindezapfen 76 des Dorns 16 aufgeschraubt, so werden die Installationsdrähte 12 zwischen dem Bund 84 und dem Kegel 78 festgeklemmt. Die Halteeinrichtung 24 bildet somit eine Klemmeinrichtung für die elektrischen Installationsdrähte 12, um diese temporär mit dem Dorn 16 der Vorrichtung 10 zu verbinden.

Der distale Endabschnitt 22 des Dorns 16 und die Schraubhülse 80 der Halteeinrichtung 24 weisen einen Durchmesser auf, der an den lichten Innendurchmesser des längsgeschlitzten und wiederverschlossenen Wellrohres 14 (sh. Figur 5) angepaßt ist.

## Patentansprüche

1. Vorrichtung zum Einziehen von elektrischen Installationsdrähten (12) in ein Wellrohr (14), das eine nach innen offene, ein Hakenprofil bildende erste Längsrinne (30), eine dazu parallele, nach innen offene, ein Widerhakenprofil bildende zweite Längsrinne (32) und dazwischen eine nach außen offene dritte Längsrinne (34) aufweist, wobei das Wellrohr (14) entlang der dritten Längsrinne (34) zur Ausbildung eines Längsschlitzes auftrennbar und der Längsschlitz des Wellrohres (14) durch Verhaken des Widerhakenprofiles (32) mit dem Hakenprofil (30) wiederverschließbar ist,
**gekennzeichnet durch**
einen Dorn (16) mit einem in die erste Längsrinne (30) hineinstehenden ersten Führungsorgan (26) und mit einem in die zweite Längsrinne (32) hineinstehenden zweiten Führungsorgan (28),
ein zwischen dem ersten und dem zweiten Führungsorgan (26 und 28) vorgesehenes Schneidelement (38) zum Längsschlitzen des Wellrohres (14) entlang der dritten Längsrinne (34) während des Aufschiebens des Wellrohres (14) auf den Dorn (16),
eine dem Schneidelement (38) in Aufschieberichtung des Wellrohres (14) stromabwärts nachgeordnete Verschlußeinrichtung (44) zum kontinuierlichen Verschließen des Längsschlitzes **durch** Verhaken des Widerhakenprofiles (32) mit dem Hakenprofil (30) während des Aufschiebens des Wellrohres (14) auf den Dorn (16), und
eine an dem in Aufschieberichtung des Wellrohres (14) stromabwärtigen distalen Endabschnitt (22) des Dornes (16) vorgesehene Halteeinrichtung (24) für die Installationsdrähte (12).

2. Vorrichtung nach Anspruch 1,
**dadurch gekennzeichnet,**
**daß** der Dom (16) einen Wellrohr-Aufschiebeabschnitt (18) mit einem Querschnittsprofil aufweist, das an das lichte Querschnittsprofil des Wellrohres (14) angepaßt ist.

3. Vorrichtung nach Anspruch 2,
**dadurch gekennzeichnet,**
**daß** der Wellrohr-Aufschiebeabschnitt (18) zwei Längsrippen aufweist, die das erste und das zweite Führungsorgan (26, 28) bilden.

4. Vorrichtung nach Anspruch 1 und 3,
**dadurch gekennzeichnet,**
**daß** das Schneidelement (38) von einer Schneidklinge (40) gebildet ist, die zwischen den beiden Längsrippen aus dem Dom (16) heraussteht.

5. Vorrichtung nach einem der Ansprüche 1 bis 4,
**dadurch gekennzeichnet,**
**daß** das Schneidelement (38) und die Wellrohr-Verschlußeinrichtung (44) an einem Gehäuse (64) vorgesehen sind, das mit dem Dorn (16) mittels einer zwischen dem Schneidelement (38) und der Wellrohr-Verschlußeinrichtung (44) vorgesehenen Wellrohr-Aufspalteinrichtung (68) verbunden ist.

6. Vorrichtung nach Anspruch 5,
**dadurch gekennzeichnet,**
**daß** die Wellrohr-Aufspalteinrichtung (68) eine Spaltklinge (70) aufweist, die mit der Schneidklinge (40) des Schneidelementes (38) axial fluchtet.

7. Vorrichtung nach einem der Ansprüche 1 bis 6,
**dadurch gekennzeichnet,**
**daß** die Verschlußeinrichtung (44) eine Verschlußrolle (54) mit einer abgestuften konkaven Innenkontur (56, 58) zum Einhaken des Widerhakenprofiles (32) in das Hakenprofil (30) des Wellrohres (14) aufweist.

8. Vorrichtung nach Anspruch 7,
**dadurch gekennzeichnet,**
**daß** zur Verschlußrolle (54) parallel orientiert eine Gegenrolle (60) mit einer konkaven Innenkontur (62) vorgesehen ist, wobei sich der Dorn (16) zwischen der Verschlußrolle (54) und der Gegenrolle (60), zu diesen senkrecht orientiert, hindurcherstreckt.

9. Vorrichtung nach Anspruch 7 oder 8,
**dadurch gekennzeichnet,**
**daß** die Verschlußrolle (54) und die Gegenrolle (60) an einem Dornabschnitt (20) reduzierten Querschnitts vorgesehen sind.

10. Vorrichtung nach einem der Ansprüche 7 bis 9,
**dadurch gekennzeichnet,**
**daß** die Verschlußrolle (54) und/oder die Gegenrolle (60) zum Vorschub des Wellrohres (14) entlang des Dornes (16) mittels eines Motors antreibbar sind.

11. Vorrichtung nach einem der Ansprüche 1 bis 10,
**dadurch gekennzeichnet,**
**daß** die am distalen Endabschnitt (22) des Dornes (16) vorgesehene Halteeinrichtung (24) für die Installationsdrähte (12) als Klemmeinrichtung ausgebildet ist.

## Claims

1. Apparatus for drawing electrical installation wires (12) into a corrugated conduit (14) which has a first longitudinal channel (30), which is open in the inward direction and forms a hook profile, a second longitudinal channel (32), which is parallel to the first, is open in the inward direction and forms a barb profile, and, therebetween, a third longitudinal channel (34), which is open in the outward direction, it being possible for the corrugated conduit (14) to be cut along the third longitudinal channel (34) in order to form a longitudinal slit and for the longitudinal slit of the corrugated conduit (14) to be reclosed by virtue of the barb profile (32) being interlocked with the hook profile (30), **characterized by**
a core (16) with a first guide element (26), which projects into the first longitudinal channel (30), and with a second guide element (28), which projects into the second longitudinal channel (32),
a cutting element (38), which is provided between the first and the second guide elements (26 and 28) and is intended for slitting the corrugated conduit (14) longitudinally along the third longitudinal channel (34) as the corrugated conduit (14) is being pushed onto the core (16),
a closing device (44), which is arranged downstream of the cutting element (38), as seen in the pushing-on direction of the corrugated conduit (14), and is intended for closing the longitudinal slit continuously by virtue of the barb profile (32) being interlocked with the hook profile (30) as the corrugated conduit (14) is being pushed onto the core (16), and
a retaining device (24) for the installation wires (12), which is provided at the downstream, distal end portion (22) of the core (16), as seen in the pushing-on direction of the corrugated conduit (14).

2. Apparatus according to Claim 1, **characterized in that** the core (16) has a corrugated-conduit pushing-on portion (18) with a cross-sectional profile which is adapted to the inside cross-sectional profile of the corrugated conduit (14).

3. Apparatus according to Claim 2, **characterized in that** the corrugated-conduit pushing-on portion (18) has two longitudinal ribs which form the first and the second guide elements (26, 28).

4. Apparatus according to Claims 1 and 3, **characterized in that** the cutting element (38) is formed by a cutting blade (40) which projects out of the core (16) between the two longitudinal ribs.

5. Apparatus according to one of Claims 1 to 4, **characterized in that** the cutting element (38) and the corrugated-conduit-closing device (44) are provided on a housing (64) which is connected to the core (16) by means of a corrugated-conduit-splitting device (68), which is provided between the cutting element (38) and the corrugated-conduit-closing device (44).

6. Apparatus according to Claim 5, **characterized in that** the corrugated-conduit-splitting device (68) has a splitting blade (70) which is aligned axially with the cutting blade (40) of the cutting element (38).

7. Apparatus according to one of Claims 1 to 6, **characterized in that** the closing device (44) has a closing roller (54) with a stepped concave inner contour (56, 58) for hooking the barb profile (32) into the hook profile (30) of the corrugated conduit (14).

8. Apparatus according to Claim 7, **characterized in that** a counter-roller (60) with a concave inner contour (62) is provided parallel to the closing roller (54), the core (16) extending through between the closing roller (54) and the counter-roller (60) and being oriented perpendicularly thereto.

9. Apparatus according to Claim 7 or 8, **characterized in that** the closing roller (54) and the counter-roller (60) are provided on a core portion (20) of reduced cross section.

10. Apparatus according to one of Claims 7 to 9, **characterized in that** the closing roller (54) and/or the counter-roller (60) can be driven by means of a motor in order to advance the corrugated conduit (14) along the core (16).

11. Apparatus according to one of Claims 1 to 10, **characterized in that** the retaining device (24) for the installation wires (12), which is provided at the distal end portion (22) of the core (16), is designed as a clamping device.

## Revendications

1. Dispositif pour tirer des fils électriques d'une installation domestique (12) dans l'intérieur d'un tube à paroi ondulée (14) qui présente une première gouttière longitudinale (30), créant un profil d'accrochage ouvert vers l'intérieur, une deuxième gouttière longitudinale (32) parallèle à la précédente, créant un contre-profil d'accrochage ouvert vers l'intérieur et, entre elles, une troisième gouttière longitudinale (34) ouverte vers l'extérieur, le tube à paroi ondulée (14) pouvant être ouvert le long de la troisième gouttière longitudinale (34) de manière à créer une fente longitudinale et la fente longitudinale du tube ondulé (14) pouvant être refermée par accrochage du contre-profil d'accrochage (32) avec le profil d'accrochage (30), caracférisé par :
- un dôme (16) comportant un premier organe de guidage (26) pénétrant dans la deuxième gouttière longitudinale (30) et un second organe de guidage (28) pénétrant dans la seconde gouttière longitudinale (32),
- un élément de découpage (38) prévu entre le premier et le second organe de guidage (26 et 28), en vue de sectionner longitudinalement le tube ondulé (14) le long de la troisième gouttière longitudinale (34) au cours du déplacement du tube ondulé (14) sur le dôme (16),
- un dispositif d'obturation (44) disposé en aval du tube ondulé (14) dans la direction de déplacement de l'élément de découpage (38) en vue de la fermeture continue de la fente longitudinale par accrochage du contre-profil d'accrochage (32) avec le profil d'accrochage (30) au cours du déplacement du tube ondulé (14) sur le dôme (16), et
- un dispositif d'arrêt du fil dinstallation (12) prévu dans la section terminale distale avant (22) dans la direction de déplacement du tube ondulé (14).

2. Dispositif selon la revendication 1, **caractérisé en ce que** le dôme (16) présente une section de déplacement du tube ondulé (18) ayant en coupe transversale un profil adapté au profil en coupe transversale ouvert du tube ondulé (14).

3. Dispositif selon la revendication 2, **caractérisé en ce que** la section de déplacement du tube ondulé (18) présente deux nervures qui constituent le premier et le second organe de guidage (26, 28).

4. Dispositif selon les revendications 1 et 3, **caractérisé en ce que** l'élément de découpage (38) comporte une lame coupante (40) qui sort du dôme (16) entre les deux gouttières longitudinales.

5. Dispositif selon l'une quelconque des revendications 1 à 4, **caractérisé en ce que** l'élément de découpage (38) et le dispositif de fermeture du tube ondulé (40) sont prévus sur un boîtier (64) qui est réuni au dôme (16) au moyen d'un dispositif de division du tube ondulé (68) prévu entre l'élément de découpage (38) et le dispositif de fermeture du tube ondulé (44).

6. Dispositif selon la revendication 5, **caractérisé en ce que** le dispositif de division (68) présente une lame coupante (70) qui est au même niveau axial que la lame coupante (40) de l'élément de découpage (38).

7. Dispositif selon l'une quelconque des revendications 1 à 6, **caractérisé en ce que** le dispositif de fermeture (44) présente un galet de fermeture (54) ayant un contour intérieur concave à degrés (56, 58) en vue de l'accrochage du contre-profil d'accrochage (32) dans le profil d'accrochage (30) du tube ondulé (14).

8. Dispositif selon la revendication 7, **caractérisé en ce que**, au galet de fermeture (54) est associé un contre-galet (60) orienté parallèlement et présentant un contour intérieur concave (62), le dôme (16) s'insérant entre le galet de fermeture (54) et le contre-galet (60), en étant orienté verticalement.

9. Dispositif selon les revendications 7 ou 8, **caractérisé en ce que** le galet de fermeture (54) et le contre-galet (60) sont prévus sur une section transversale réduite de la section amincie (20).

10. Dispositif selon l'une quelconque des revendications 7 à 9, **caractérisé en ce que** le galet de fermeture (54) et/ou le contre-galet (60) sont entraînés au moyen d'un moteur le long du dôme (16) en vue de l'obturation du tube ondulé (14).

11. Dispositif selon l'une quelconque des revendications 1 à 10, **caractérisé en ce que** le dispositif d'arrêt (24) prévu, à la section terminale distale (20) du dôme (16), est réalisée sous forme d'un dispositif de collage pour les fils d'installation.
